# EUROPEAN PATENT APPLICATION

(11) **EP 1 447 960 A2**
(43) Date of publication of application: **18.08.2004**
(21) Application number: 04250759.0
(22) Date of filing: 12.02.2004
(51) Int. Cl.: H04M 1/725, H04M 11/04

(54) **Wireless communication device, system and communication method**

(30) Priority: 12.02.2003 CN 03101025
(71) Applicant: The Pinpoint Company Limited, Hong Kong (HK)
(72) Inventor: Lewis-Evans, Jonathan P., Hong Kong (HK); Tang, Michael T.H., Hong Kong (HK); Chung, Po Yang, Hong Kong (HK); Ku, Ava Yat Lai, 19/F., Flat D., Block 42, Kowloon, Hong Kong (HK); Chan, Andrew Wing Nin, Flat H., 41/F., Block 2, New Territories, Hong Kong (KH)
(74) Representative: Howe, Steven

(57) **Abstract**

A wireless communication device (2) comprises a mobile unit for transmission and reception of voice calls through a mobile phone network having a user-accessible dial button (10) controlling a call activation switch, the unit being programmed to communicate with a first stored telephone number, which is typically that of a call centre able to provide assistance, on operation of said call activation switch, the unit also being provided with location determining functionality.

## Description

The present invention relates to a mobile communication device adapted for particular but not exclusive use by the elderly or handicapped or vulnerable persons, to a communications system supporting communications through such a mobile device, and to a method of providing voice communication by means of such a system.

Amongst the elderly a high proportion of the population worldwide suffers to a greater or lesser extent from a mild form of dementia. According to the Alzheimer's Disease Education and Referral Center of the USA, the proportion is 1 in 50 persons over 65 which climbs to 1 in 5 persons over 80 years of age. This represents a significant proportion of the population which will inevitably increase over the next 15 years as the baby boomer generation attains that age. Persons suffering from mild dementia are frequently active and mobile and therefore able to go out alone but may be at risk from forgetting how to return home or suffering injury or accident. Equally, injury or accident may occur when at home. In such situations it is highly desirable for the person to be able to quickly communicate with someone able to offer assistance.

Whilst a mobile phone or cellular telephone may be appropriate for some situations, the elderly or infirm may often lack the physical dexterity and/or mental acuity to be able to operate small controls and other relatively complex operational procedures of the normal mobile phone which most of us take for granted.

In order to be able to provide assistance to a person in difficulty it is also highly desirable to be able to locate the whereabouts of the user. Various existing technologies are able to locate standard mobile or cellular handsets. The US government has mandated that operators of cellular communications networks are capable of locating to a statutory standard of accuracy a caller using a mobile handset to make an emergency (911 in the US) call and other countries are following or proposing to follow that example. Various systems have also been proposed for locating the whereabouts of a unit which requires no interaction on the part of the person carrying or wearing the unit, such being particularly applicable for children.

The present invention seeks to provide a unit which can be used by an elderly or infirm or handicapped user to allow the user to communicate with someone able to offer or summon assistance, and to a system supporting communication by means of such a unit, the unit providing a variety of functionalities able to facilitate provision of practical and/or emotional assistance as is needed.

According to a first aspect the invention provides a wireless communication device comprising a mobile unit for transmission and reception of voice calls through a mobile phone network having a user-accessible call activation switch, the unit being programmed to communicate with a first stored telephone number on operation of said call activation switch, and further comprising location determination means.

Such a structure makes the device very easy for a user, be they a child, or elderly, or infirm or handicapped in some way, to operate.

The location determination means preferably utilizes signals from the mobile network, such as a GSM network. Alternatively, or additionally, the device may include a GPS unit. The information indicative of the device location may be transmitted to a second stored number on operation of the call activation switch, but may also be transmitted in response to a received request from an authorised source. The information relating to device location is transmitted as a burst type message such as an SMS message. The second stored number is used to send the location information to a server which processes this for display.

The location determination means may also comprise a radio frequency beacon, which on activation continuously transmits a signal. This may be used to supplement the network-based location determination to provide shorter range very accurate position information. The beacon may be remotely activatable in response to a received request from an authorised source. The device may further include network detection means for detecting when the device is within an area of mobile phone network coverage, the unit being adapted to activate said radio frequency transmitter when said detection means detects the device as outside network coverage and said call activation switch is operated.

The device may be programmed such that if operation of the call activation switch does not result in connection of a call to the first stored number, the unit can re-dial a predetermined number of times until a connection is made. Subsequent to connection of the call to the first stored number any second or subsequent operation of the call activation switch occurring within a predetermined time since a first operation of said switch is ignored. After disconnection by the other party the unit automatically disconnects after a predetermined period unless the user of the device has since operated the call button to disconnect.

The device may also include a volume control button or buttons operable to adjust the volume of received voice call only when a call is connected to the unit.

Battery charge detection means may be provided wherein the device is programmed to send a message to a third stored phone number in the event that a battery charge level falls below a preset value. The internal settings of the unit may be remotely controllable by means of SMS messages sent from an authorised entity.

The mobile unit may further be provided with local radio frequency transmission and reception means, and with in addition a base station unit also provided with local radio frequency transmission and reception means, the mobile unit being programmed to adopt a home status when within communicating range of said mobile base unit, which status is communicated to said stored telephone number. A remote activation unit which is wearable by a user may be provided having local radio frequency transmission means, whereby activation of the remote activation unit by a user sends a signal to said mobile unit which in turn communicates with said first stored telephone number.

The device may also have means for providing an audible signal, which means are remotely activatable in response to a received request from an authorised source, which is preferably a very local signal for alerting a potentially near-unconscious or sleeping user.

The mobile unit may have just a single user-accessible call activation switch, or may have a single user-accessible call activation switch associated with said stored telephone number, and a second call activation switch associated with a further stored telephone number, with the first stored telephone number generally being of a call centre providing user assisting services, and the further number of a relative, friend or other carer of the user.

In a further aspect the invention resides in a communication system comprising at least one mobile device comprising a mobile unit for transmission and reception of voice calls and having a call activation switch, the device being programmable to call a predetermined number or numbers on operation of the switch, further comprising location determination means, and at least one call processing centre associated with such predetermined telephone number or numbers at which a human operator receives calls from the device and initiates calls to the device through a mobile communication network, the device being programmed to send information relating to the device location to said call processing centre on operation of the call activation switch.

The mobile unit may then send information relating to the device to said call processing centre in reply to a location request command sent from said call processing centre. The call processing centre may display the device location on a secure website accessible to authorised contacts.

The call processing centre may include data storage means storing data comprising personal information relating to the mobile device user. Moreover, the call processing centre may re-direct calls from or to a mobile device to or from an authorised contact.

Important to the practical success or otherwise of such a device is that users must remember to carry it with them when they leave the home. In this respect a mobile phone is wholly inadequate. A reaction to the inconveniences of forgetfulness is to simplify the user's life to minimise the opportunities for forgetting and to create positive, reinforcing habits to obviate the occasions of forgetting such as taking the same things with them whenever they go out. Research shows that the most frequent items selected for reinforcing habit creation when leaving the home are the wallet or purse and keys.

The device may be incorporated with a receptacle for containing small personal effects, such as a wallet suitable for containing one or more of notes, coins, credit cards, identification cards or the like, or may be a key fob for holding one or more door keys.

In a still further aspect the invention resides in a method of communication between a mobile electronic device and a call processing centre the device having a transceiver for transmission and reception of voice signals via a mobile phone network the device including data storage means and a user accessible dial button associated with a call activation switch and including location detecting means, the method comprising the step of, retrieving in response to activation of the call switch by the user, a stored telephone number associated with said call processing centre from said storage means, dialling said stored telephone numbers to open voice communication therewith and measuring one or more location dependent criteria and sending data representative thereof to a second stored telephone number.

The method may involve measuring one or more position dependent criteria and sending data representative thereof to a second stored telephone number. The position dependent criteria may comprise one or more properties of signals associated with the mobile phone network. Alternatively or additionally, the criteria may comprise properties of signals associated with a GPS system, may include an RF beacon which transmits a signal which can be tracked by a suitable receiver.

The data representative of device position is supplied for display on a website together with stored map image data. The method may also involve onward connection of a voice call from the device to a stored telephone number on to a further authorised contact, or the onward connection of a call from an authorised contact to the call processing centre on to the device.

In a further aspect the invention resides in a combination of the device as defined above and a charging cradle comprising a main body defining a well having a pair of electrical contacts at the bottom of the well for contacting complementary contacts on the device, and an upstanding rear wall and a side wall upstanding from the main body to facilitate the guiding of the device into the cradle. This allows the device to be charged easily by opening the protective flap and inserting the device into the charging cradle with the wallet or purse still attached.

In a still further aspect the invention resides in a wireless communication device comprising a mobile unit for transmission and reception of voice calls through a mobile phone network having a user-accessible call activation switch, the unit being programmed to communicate with a first stored telephone number, on operation of said call activation switch, and wherein the unit is remotely activatable to open voice communication on receipt of a message from an authorised entity.

In a still further aspect the invention resides in a communication system comprising: at least one mobile device comprising a mobile unit for transmission and reception of voice calls and having a call activation switch, the device being programmable to call a predetermined number or numbers on operation of the switch; at least one call processing centre associated with said predetermined telephone number or numbers at which a human operator receives calls from the device and initiates calls to the device through a mobile communication network; and wherein the unit is remotely activatable to open voice communication on receipt of a message from an authorised entity.

Embodiments of the invention are now described, by way of example only, with reference to the following drawings in which:
Figure 1 is a schematic overview of a communication and location system in accordance with one aspect of the invention;
Figure 2 is an external view of a wireless communication device in accordance with a further aspect of the invention with a flap in an open position;
Figure 3 is an external view of the device of Figure 2 with the flap in a closed position;
Figure 4 is an underside view of the device of Figure 2 with a wallet part removed;
Figure 5 is a front perspective view of a charger;
Figure 6 shows the device being fitted into the charger;
Figure 7 is a schematic view of the electronic components of the portable communication device;
Figure 8 is a logic diagram indicating the main operational steps in activation and use of the device by a user;
Figure 9 is a logic diagram indicating the main operational steps involved in providing location information;
Figure 10 is a logic diagram indicating the main operational steps on a call initiated by a call centre;
Figure 11 is an external view of a communicator unit in accordance with the second embodiment of the invention;
Figure 12 is an external view of a remote control unit in accordance with the second embodiment of the invention;
Figure 13 is an external view of a base station unit in accordance with the second embodiment; and
Figure 14 shows the base station unit with the communicator sub-unit fitted therein.

The invention in one aspect concerns a wireless portable device allowing a user to communicate by voice with a predetermined location. The device and the communication system of which it forms a part are discussed in relation to a specific application, namely a device for use by the elderly or handicapped or by vulnerable persons who are mobile and yet have a need to keep in voice communication with someone providing a caring function, hereafter referred to as "a carer", but who for some reason such as mental impairment, or limited manual dexterity are unable to use a conventional mobile phone. Note however that the device and system have much wider applicability, for example with children, or where for some other reason use of a mobile phone with its associated complexity is not desired or appropriate. Whilst in many respects the device is very similar to a mobile or cellular phone and has many components in common herewith, externally and operationally it is significantly different.

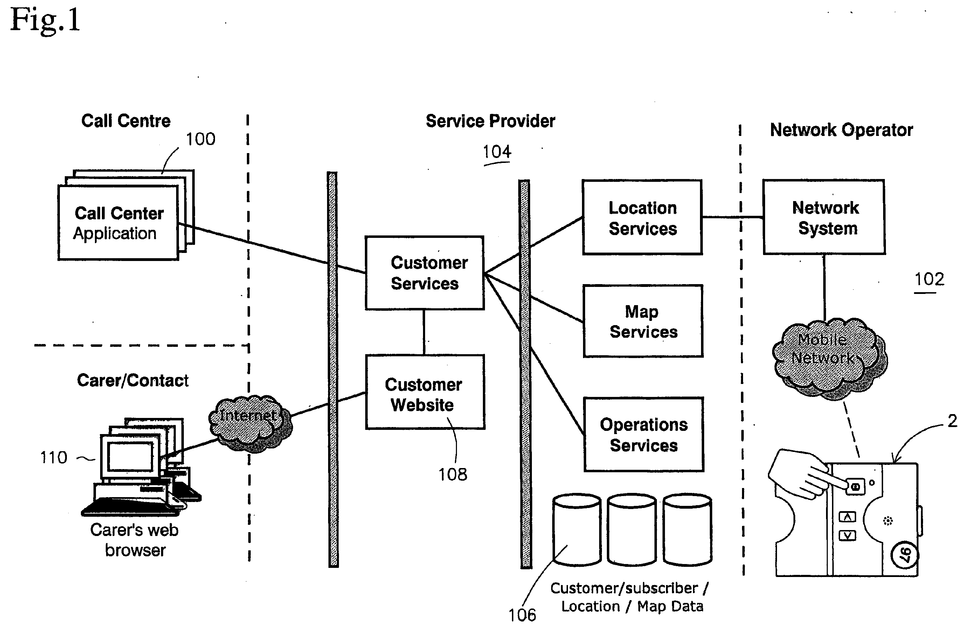

An overview of the communications system in accordance with an embodiment of the invention is shown schematically in Figure 1. The wireless portable communication device to be carried by the user is indicated 2. The device incorporates a transceiver for sending and receiving telephone calls and other data to and from a call centre 100 in a wireless manner via a mobile telecommunication network 102.

Calls received from the device at the call centre 100 may be forwarded to another authorised party such as someone having responsibility for caring for the user such as relative or doctor. Equally, calls from such an authorised party may be forwarded by the call centre 100 to the user.

The mobile network of any particular network operator may obviously be configured in a variety of ways, and in passing telephone calls to the call centre may equally make use of line based public switched telephone network (PSTN). Calls are routed through a service provider 104 who is able to provide to the call centre 100 a variety of additional information and services as discussed in more detail below, for example to provide information about the location of the device and to provide information specific to the user such as medical records, details of doctors or medications stored on data storage servers 106. Such location or other information can also be provided in real time to an authorised party via a website 108 and displayed through a web browser on a computer device 110 of the authorised party.

Although the system configuration shows the network operators, service provider and call centre as separate entities, as is the most likely commercial scenario, it will be appreciated that many other alternatives are readily possible. For example, the service provider and call centre may be the same entity running the various applications on different servers or even on the same appropriately partitioned servers. Alternatively, the network operator might themselves also act as a service provider, and even as a call centre.

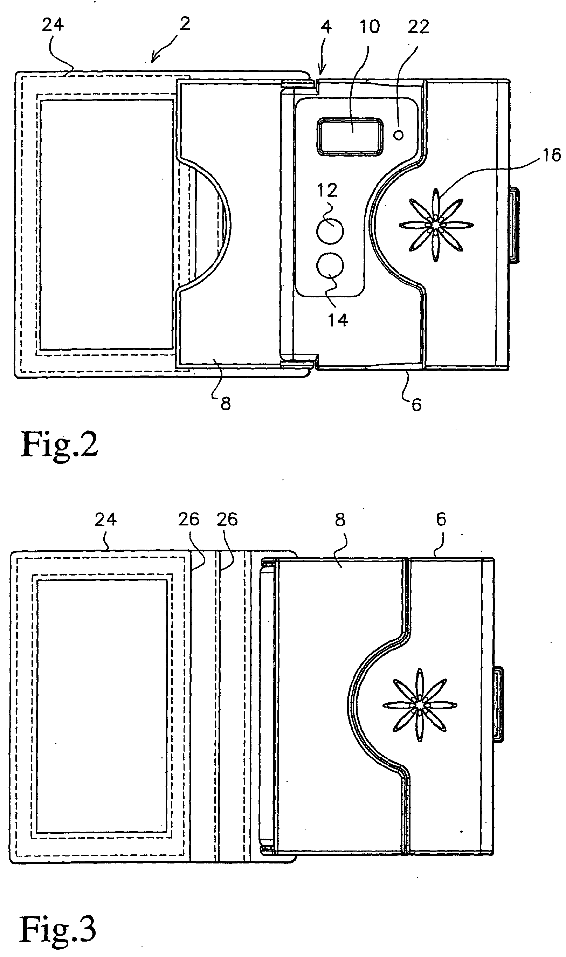

As can be seen in Figures 2 and 3 the device 2 comprises a housing 4 formed of rigid plastics material and providing at least a splashproof protection of its internal components. The housing 4 has a main body 6 and pivotably movable flap 8 which can be opened out to reveal or closed to conceal the control buttons.

The control buttons include a call button 10 and a pair of volume buttons 12, 14 for respectively raising or lowering the audible volume level of voice calls. It will be noted that these are the only user accessible controls. Each of these are membrane-type push buttons, with a tactile click that is felt by the user. Each of the buttons may have surface relief whereby the buttons can be readily identified by the blind or partially sighted. The call button will be provided with graphics or printing of a bright colour contrasting with the rest of the housing. The presence of a prominent and easily accessible and identifiable call button 10 is highly significant in ensuring that there is no possibility of confusion on the part of the user as to how to operate the device. The movable flap 8 when closed serves to prevent accidental pressing of the control buttons. The front of the main body 6 includes a shaped opening 16 beneath which a speaker is arranged. Located adjacent to call button 10 is a charge indicator light 22. A reset button is provided on the rear of the device.

The device is secured to a receptacle which in the illustrated embodiment is a wallet or purse 24, but might equally be a key fob for holding door keys. The wallet illustrated has one or more pockets 26 for containing items such as an ID card, credit cards, notes, coins and the like. The incorporation or integration of the electronic unit into an item such as wallet or purse which would habitually be carried when leaving home is important for ensuring that users, even those of impaired metal acuity, remember to take the device with them. Furthermore, such integration means the user is not bothered by having to take out and take care of an additional item.

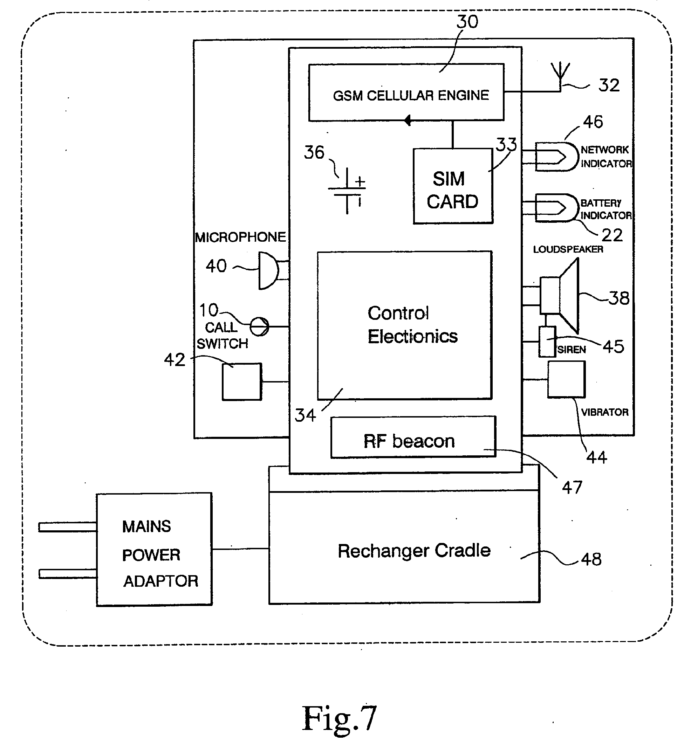

Figure 7 shows in schematic form the electronic components. Largely, the electronic components are similar to those of a mobile or cellular phone. The described embodiment is intended to operate in a GSM (Global System for Mobile Communication) mobile communications network, but as will be discussed in more detail below the device may be configured for various other environments as the skilled person will readily appreciate. The Siemens MC35 cellular engine is particularly appropriate for providing the desired functionality as hereinafter described. The device includes a SIM (Subscriber Identity Mobile) card 33. A control processor 34 embodied on a control chip and associated electronics serves to control the device according to a set of programmed instructions. Power is provided by a rechargeable battery 36 such as a polymer lithium ion type. The device also includes a speaker 38 and microphone 40. It will be noted that the MC35 cellular engine incorporates various feedback suppression circuitry which is especially useful in a device of such small size where the speaker and microphone are closely located, and it is not intended that an earphone should be used. The user accessible call button 10 is shown, depression of which activates a call activation switch and hence the call sequence. A buzzer 42 provides a ring tone to indicate an incoming call, whilst a vibrator 44 provides a vibratory indication of an incoming call. The device may also be provided with a siren 45 which provides a very loud (eg to 95dB) audible signal via the loudspeaker 38, and which can be activated remotely by the call centre if they suspect that the user may have fallen asleep in a particularly dangerous situation or may be near unconscious. Connected to the modem is the battery indicator 22 which includes a multicolour LED (light emitting diode), including a green LED indicating a charge level above a predetermined percentage valve, an amber LED indicating the device is undergoing a charging operation, and a red LED indicating a low charge, for example at 40% or less of full charge. Also connected to the modem is a network indicating LED 46 which indicates that a network signal strength above a predetermined value is detected. This LED 46 is generally hidden from normal view of the user beneath a removable rear panel so as not to unnecessarily complicate the device for the user, and is used in checking and maintenance of the device.

The device 2 also provides location determining functions, which although not essential to the invention in its broadest aspect are highly desirable. The possible hardware therefor is not described in detail as various proprietary chips and systems are available as the skilled person will well understand. In the specific embodiment described the Siemens MC35 modem has such location determining functionality built in. Briefly, in the GSM environment the system employs an enhanced cell triangulation using an NMR (network measurement report) technique. Such a technique employs a detection of signal intensity from a base station of a primary cell in which the device is located and from a number of other more distant cells. In various known techniques this intensity information is sent to the mobile network server for further processing to yield an x, y position, as is well known to those skilled in the art. Various other known techniques are available for other telephone network types.

Such GSM for other network based location determination provides a relatively course location information. It is possible to use other techniques such as radio frequency (RF) location determination, either as an alternative to or in addition to the GSM type of determination, providing a more accurate location determination.

The embodiment illustrated in Figure 7 uses an RF beacon 47 in addition to the location determining facility of the modem. Various proprietary products are available, comprising an RF transmitter which on activation continuously transmits a signal at a specified frequency and on a channel particular to the device. A typical product for European use operates at 433 MHz, with 40 available channels at 12.5 KHz separation, continuous wave 35ms per pulse, 1200 ms between pulses. Tracking of the signal is by a proprietary direction finding receiver, which monitors signal strength/direction. Typical detection maximum range is about 5km, 1.5km for normal use in open areas or 500m in urban areas. The beacon 47 is remotely activatable and deactivatable through control signals sent through the modem 30 to the control electronics, as will be discussed further below.

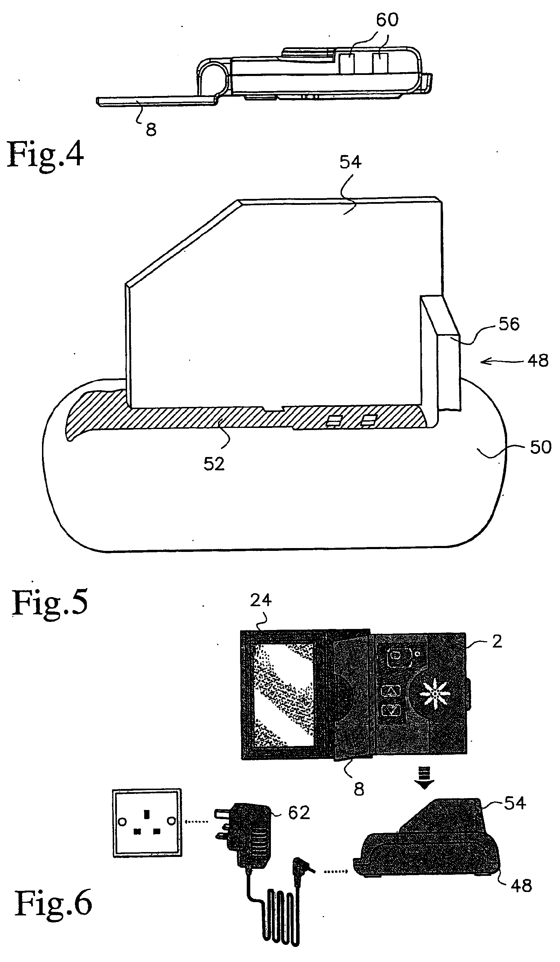

In contrast to most phones, the device is recharged using a charging cradle 48 as shown in Figures 5 and 6. The charging cradle 48 has a particular construction to allow the device 2 to be very easily inserted into the cradle 48. More particularly, the charging cradle includes a housing having a main base or body 50 of substantial dimension defining an upwardly facing shallow well 52 and having a vertically extending rear wall portion 54 of substantial height and a sidewall portion 56. At the opposite end (left hand end in the figures) the well 52 is open so that when the device 2 is inserted the flap 8 and wallet 24 can extended therethrough. The distance between the front edge of the well 52 and the back wall 54 is chosen so that device can only be inserted with the flap 8 in an open position. This ensures that the call button 10 remains readily accessible, in the event of an emergency. The base of the well 52 includes a pair of protruding sprung metal contacts 58 which engage metal contacts 60 on the lower edge of the device 2, as can be seen in Figure 4. The charging cradle 48 is connected to a mains power supply through a power adapter 62 providing dc voltage of about 6 to 8V. The use of such a charging cradle avoids the need for the user to have to fit any kind of plug or pin into a charging socket as is conventionally used in mobile phones, such an operation being particularly problematic for those of limited manual dexterity.

Instead, even a user of limited manual dexterity can engage the device 2 with the extended back wall 54 and then the end wall 56 and push or even drop the device into the well in the correct position for proper electrical contact.

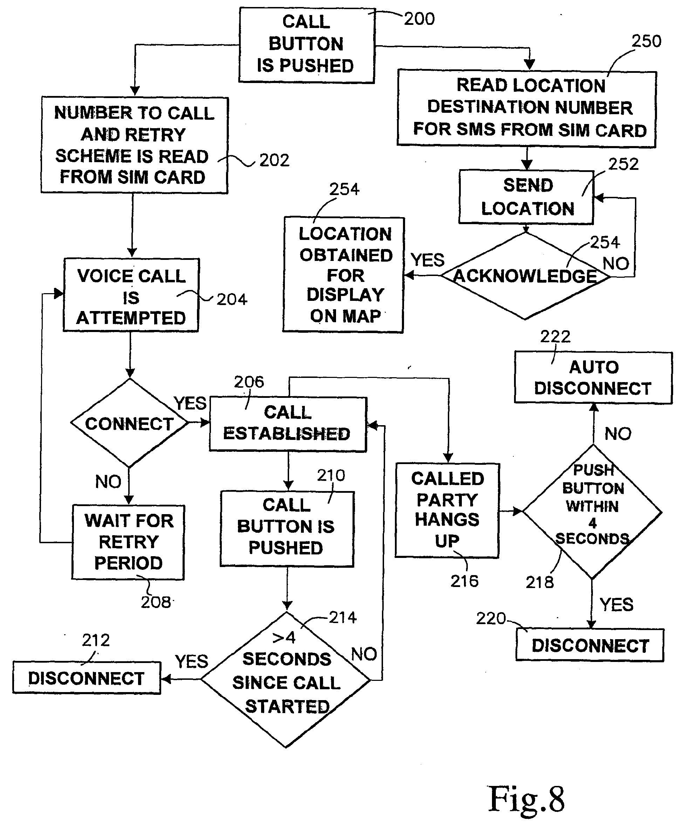

The operation of the device 2 will now be described, firstly with reference to figure 8. When the user wishes to make a call he or she opens the flap 8 and presses the call button 10 (step 200). The software program running on the control chips instructs the modem of the cellular engine 30 to retrieve from the SIM card 33 the phone number of the call centre 100 stored therein (step 202).

A dial retry scheme in the event that the call to the call centre 100 is not immediately connected is also read from the SIM card 33 (step 202). The retrieved number is dialled and the voice call attempted (step 204). Assuming the call is answered by the call centre operator (step 206), the operator is then able to talk to the user to provide assistance in whichever way is appropriate for the particular circumstance. If the call is not connected, the modem waits for the predetermined retry period (step 208) and redials, according to the retry scheme retrieved by the software program from the SIM card.

Once the call is finished the user can disconnect by pressing the call button 10 again (step 210). However, in the event that the call button is pushed within a predetermined period from the start of the call, typically set at about 4 seconds, the call remains connected (steps 214,206). This feature means that if a user perhaps with limited manual dexterity inadvertently presses the button twice or more in rapid succession, the call is not disconnected.

In the event that the called party hangs up first (step 216), the user can disconnect the device themselves within a predetermined time by pressing the call button (step 218,220), typically a 4 second period, but if they do not do so, the software program instructs the modem to automatically disconnect (step 222).

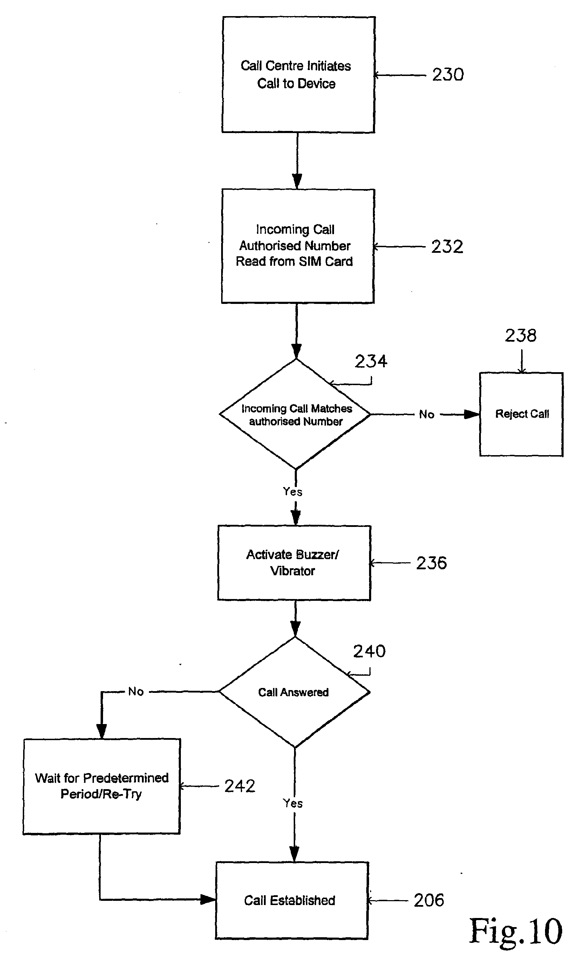

It is also possible for calls to be made to the device from the call centre ("pull type"), as explained in relation to Figure 10. The call centre calls the phone number accorded to the device (step 230). The device will check (step 234) that the call comes from an authorised phone number retrieved from the SIM card (step 232) and assuming it does, will commence the ringing of the buzzer and vibrator (step 236). If it does not, the call may be rejected (step 238). The user may answer the call by pressing the call button (step 240), in which case the call is established (step 206).

If the user does not answer the call, after a predetermined period the call is automatically connected. This function is especially useful in an emergency situation, for example if an elderly person has had a fall in the home, allowing the call centre to listen in on the user. Following establishment of the call (step 206), the same functionalities to prevent unintended disconnection and providing automatic disconnection (steps 210 to 222 of Figure 8) are provided.

In addition to establishing voice calls to and from the device and call centre, it is equally possible for the call centre to forward a received call from the device to an authorised contact, such as a relative or other carer, or to forward a retrieved call from a relative or other carer to the device.

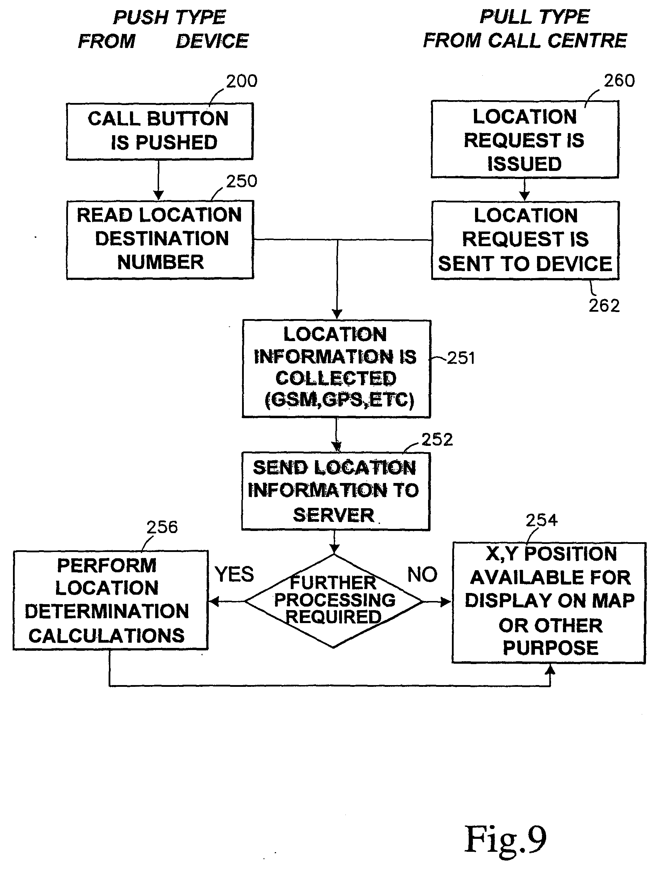

As discussed above, in addition to providing voice communication, the device may also provide location information, which although not essential is highly desirable. Turning to Figures 8 and 9, each time the user presses the call button 10 (step 200), the software program instructs the modem to read a phone number from the SIM card to which location-related information is to be sent (step 250). The precise nature of this information will vary according to the mobile network type and location scheme employed. For example, in a GSM network, the information will typically be representative of intensities of network signals from a number of different network cells. This information is incorporated within a data burst type message such as an SMS (short message service) message as is well-known and defined by various industry standards and sent to the location server at the service provider or network operator (step 252). It may be arranged that a return acknowledge message, usually also a SMS message, is required (step 254); otherwise, the location SMS message is sent again until a receipt message is received. Figure 9 shows the location determination steps in further detail. As noted above the location information to be collected from the device will depend on the mobile network type and location technique employed, or whether some non-network technique such as GPS or rf (radio frequency) position finding is employed. Note also that depending on the precise system employed, the location information may be processed within the device itself to yield an x, y position (step 254) in which case no further processing is required. However, more usually, part of the processing is required to be carried out in the service provider server or network server to yield an x, y position from the detected criteria (step 258). As indicated schematically in Figure 1, the service provider may store relevant map information and provide this along with the user's x, y position to a website 108 on a webserver, from where it can be accessed and displayed to the call centre 100 operator, and to other authorised contacts such as relatives, health professionals or emergency services. The automatic dispatch of the location information to the service provider each time a call is made irrespective of whether it is specifically needed, means that the location information can be available to the operator very rapidly if it is needed without the operator having to initiate any location request. This location information may be extremely important to the operator in their conversation with the user. For example, if the user is away from home and lost or disorientated, the operator may be able to immediately guide the user to a familiar place or to somewhere or someone who can provide physical assistance.

It is also possible for the call centre 100 to initiate a location request ("pull type"), as is illustrated in the top right hand side of Figure 9. In this case the call centre issues a location request (step 260), sent as a burst type message such as an SMS message to the device (step 262). Thereafter the device responds to the request in a similar manner as a push-type request.

In addition to providing location information based on the telephone network when the call button is pressed, the device may also send an RF signal from the RF beacon 47. Activation (and deactivation) of the RF beacon will normally be on the initiation by the call centre in a "pull type" instruction, similarly instigated by an SMS message to the device. The device may also be configured to automatically activate to beacon 47 in the event that the device is outside phone network coverage, (for example as detected by measuring signal strength) and the call button 10 is pressed.

The device is accorded various additional functionalities many of which are found in mobile phones, and various of which are not. However, in contrast to a conventional mobile phone, the device does not include user-accessible controls, but rather employs remote "over the air" initiation from the call centre of various control commands stored in and executable by the processor.

More particularly, two types of commands can be used with the device. Firstly, programming of the SIM card is used to set the initial operating parameters of the device and to program numbers to which voice calls and messages are sent and from which voice calls can be received. Secondly, control commands are used to request a response or change the mode of the device. The processor stores preferably as SMS strings on the SIM card the various programming commands initiatable in response to SMS messages from the call centre or other authorised entity. For security purposes all command messages must be preceded by a password. The programming commands may include for example:
Set number and retry scheme for outgoing calls
Set number to validate for incoming calls
Set number and retry scheme to send location information
Set location information format
Set number and retry scheme to send low battery alert
Set low battery format
Change password
Change ringer volume
Change vibrator status
Activate siren
Activate RF beacon
Deactivate RF beacon
Read messages
Delete messages
Disconnect call
Call acknowledge

The device includes various particular functions associated with maintaining the battery charge. As described previously, the device includes a green, amber and red LED activated by a circuit according to detection of sufficient charge and a low charge level (for example at 40% of full charge). In addition however, the control processor is programmed to automatically send an SMS message when the low battery condition is detected to the call centre or to any other authorised contact, relative or carer. In response thereto, the call centre operator or authorised contact may then call the user to remind the user to place the device on the charging cradle.

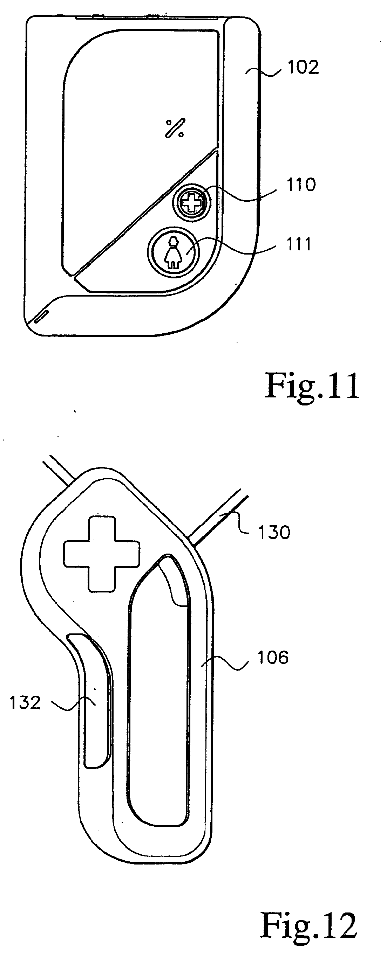

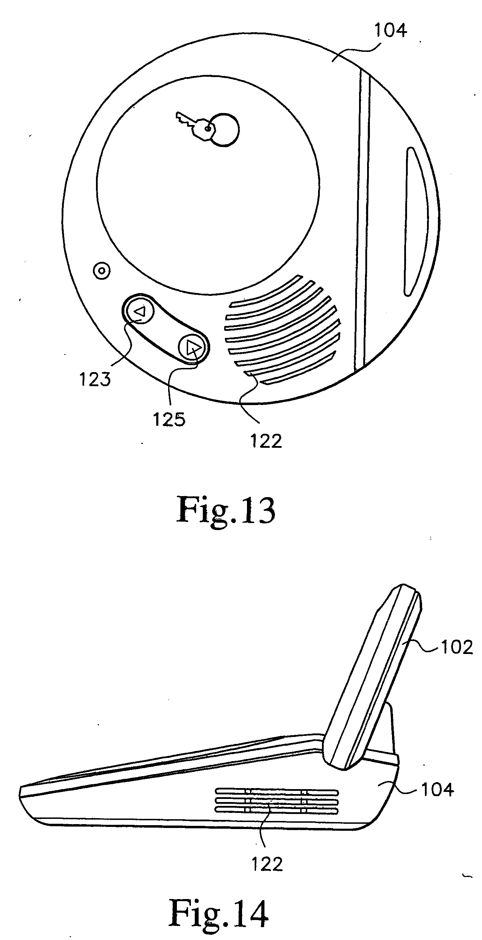

Figures 11 to 14 illustrate a second embodiment of the invention, where instead of a single unit 2, the device includes a number of sub-units including a communicator unit 102 shown in Figure 11, a base station unit 104 illustrated in Figure 13 and a wearable pendant-type call activator 106 shown in Figure 12. The communicator unit 102 is provided with the complete functionality of the unit 2 of the first embodiment including a call button 10 to allow the user to contact the call centre. In addition to call button 10, the communicator unit may have one additional call activation button 111 which calls a further predetermined number which typically would be a telephone number of a relative, friend or other carer.

The base station unit 104 provides the functionality of the charging cradle of the first embodiment, including an integrated transformer, but also includes various additional functionality, as now described. Like the charger, it is intended that the base station unit 104 will be permanently located in the user's house and connected to a mains power supply. Each of the communicator 102, and base station unit 104, are provided with low power radio transmitter and receiver allowing short range communication, whilst the pendant call activator 106 is provided with a transmitter. The communication is via RF signals which include embedded unique ID codes, to prevent interference with other devices. If the communicator 102 is within communicating range of the base station unit 104 (or physically placed on the unit 104) the system records an "at home" status, which status is accessible by the call centre in response to a status enquiry. When the communicator unit is physically placed on the base station 104 unit as illustrated in Figure 14, in addition to providing charging, the base station unit is able to provide an audio output through its loudspeaker 122, which provides a higher power output than is available directly through the communicator unit 102. It also incorporates a high sensitivity microphone, allowing hands free operation. Also provided are loudspeaker volume up and down buttons 123, 125.

The call activator pendant 106 acts as a remote control switch which can be worn on the user for example around his or her neck on a lanyard 130, or can be carried on a wrist strap or belt. The call activator pendant 106 is provided with a single call activation button 132 which when depressed sends a one-way RF signal to the communicator unit 102, which in turn sends a call signal to the call centre in the manner as discussed above. Thus, pressing the button 132 is functionally equivalent to pressing the call button 110. In addition, the call activator pendant 106 may have low battery detector, sending a signal to the communicator 102 when battery level drops below a predetermined value, which in turn communicates this information to the call centre. A low battery LED on the pendant 106 may also be activated.

It will be understood that the device allows a user to be given constant assistance wherever they are, either reassurance or emotional or practical assistance. The device is extremely simple for the user to operate yet maintains sophisticated device management and support functions controllable automatically or remotely.

## Claims

1. A wireless communication device comprising a mobile unit for transmission and reception of voice calls through a mobile phone network having a user-accessible call activation switch, the unit being programmed to communicate with a first stored telephone number, on operation of said call activation switch, the device further comprising location determination means.

2. A device according to claim 1 wherein the location determination means comprises means for location determination based on signals from the mobile phone network.

3. A device according to claim 1 wherein the location determination means comprises a GPS unit.

4. A device according to claim 1, 2 or 3 wherein the information relating to the device location is transmitted to a second stored number on operation of the call activation switch.

5. A device according to claim 4 wherein information relating to device location is transmitted to the second stored number in response to a received request from an authorised source.

6. A device according to claim 4 or 5 wherein the information relating to the device location is transmitted as an SMS message.

7. A device according to any one of claims 4 to 6 wherein the second stored number represents computer means, by means of which said location information can be displayed to an operator.

8. A device according to any preceding claim further comprising second location determination means in the form of a radio frequency beacon.

9. A device according to claim 8 wherein the radio frequency beacon is remotely activatable in response to a received request from an authorised source.

10. A device according to claim 8 further comprising network detection means for detecting when the device is within an area of mobile phone network coverage, the unit being adapted to activate said radio frequency transmitter when said detection means detects the device as outside network coverage and said call activation switch is operated.

11. A device according to any preceding claim wherein the unit is programmed such that, if operation of the call activation switch does not result in connection of a call to the first stored number, the unit redials until a connection is made.

12. A device according to any preceding claim wherein subsequent to connection of the call to the first stored number any second or subsequent operation of the call activation switch occurring within a predetermined time since a first operation of said switch is ignored.

13. A device according to any preceding claim wherein, after disconnection of voice communication by the other party the unit automatically disconnects after a predetermined period unless the user of the device has since operated the call button to disconnect.

14. A device according to any preceding claim further comprising a volume control button or buttons operable to adjust the volume of received voice call only when a call is connected to the unit.

15. A device according to any preceding claim further comprising battery charge detection means wherein the device is adapted to send a message to a third stored phone number in the event that a battery charge level falls below a preset value.

16. A device according to any preceding claim wherein internal settings of the unit are remotely controllable by means of SMS messages sent from an authorised entity.

17. A device according to any preceding claim wherein the mobile unit is further provided with local radio frequency transmission and reception means, and wherein there is provided a base station unit also provided with local radio frequency transmission and reception means, the mobile unit being programmed to adopt a home status when within communicating range of said mobile base unit, which status is communicated to a stored telephone number.

18. A device according to claim 17 further comprising a remote activation unit which is provided with local radio frequency transmission means, whereby activation of the remote activation unit by a user sends a signal to said mobile unit which in turn communicates with said first stored telephone number.

19. A device according to claim 18 wherein the remote activation unit is wearable by a user.

20. A device according to any preceding claim wherein the mobile unit further comprises means for providing an audible signal, which means are remotely activatable in response to a received request from an authorised source.

21. A device according to any preceding claim wherein the mobile unit is provided with only a single user accessible call activation switch.

22. A device according to any one of claims 1 to 20 wherein the mobile unit is provided with a single user accessible call activation switch associated with said stored telephone number, and a second call activation switch associated with a further stored telephone number.

23. A device according to any preceding claim wherein the first stored telephone number is that of a call centre providing user assisting services.

24. A device according to claim 22 where said further stored number is the telephone number of a relative, friend or carer of the user.

25. A device according to any preceding claim wherein the mobile unit is incorporated with a receptacle for containing small personal effects.

26. A device according to claim 25 wherein the receptable is a wallet suitable for containing one or more of notes coins, credit cards, identification cards or the like.

27. A device according to claim 25 or 26 wherein the receptacle is a key fob for holding one or more door keys.

28. A communication system comprising:
at least one mobile device comprising a mobile unit for transmission and reception of voice calls and having a call activation switch, the device being programmable to call a predetermined number or numbers on operation of the switch, and which further comprises location determining means;
at least one call processing centre associated with said predetermined telephone number or numbers at which a human operator receives calls from the device and initiates calls to the device through a mobile communication network;
the device being programmed to send information relating to the device location to said call processing centre on operation of the call activation switch.

29. A communication system according to claim 28 wherein the mobile device comprises location determining means and sends information relating to the device to said call processing centre in reply to a location request command sent from said call processing centre.

30. A communication system according to claim 28 to 29 wherein the call processing centre displays the mobile device location on a website accessible to authorised contacts.

31. A communication system according to any one of claims 28 to 30 wherein the call processing centre includes data storage means storing data comprising personal information relating to the device user.

32. A communication system according to any one of claims 28 to 31 wherein the call processing centre may redirect calls from or to the device to or from an authorised contact.

33. A method of communication between a mobile electronic device and a call processing centre the device having a transceiver for transmission and reception of voice signals via a mobile phone network the device including data storage means and a user accessible dial button associated with a call activation switch and including location detecting means, the method comprising the step of, retrieving in response to activation of the call switch by the user, a stored telephone number associated with said call processing centre from said storage means, dialling said stored telephone numbers to open voice communication therewith and measuring one or more location dependent criteria and sending data representative thereof to a second stored telephone number.

34. A method according to claim 33 wherein said location dependent criteria comprise one or more properties of signals associated with the mobile phone network.

35. A method according to claim 33 wherein said location dependent criteria comprises properties of signals associated with the GPS system.

36. A method according to any one of claims 33 to 35 wherein the data representative of device location is supplied for display on a website together with stored map image data.

37. A method according to any one of claims 33 to 36 further comprising the step of onward connection of a voice call from the device to a stored telephone number on to a further authorised contact.

38. A method according to any one of claims 33 to 37 further comprising the steps of onward connection of a call from an authorised contact to the call processing centre on to the device.

39. A device according to any one of claims 1 to 24 in combination with a charging cradle, the cradle comprising a main body defining a well having a pair of electrical contacts at the bottom of the well for contacting complementary contacts on the device, and an upstanding rear wall and a side wall upstanding from the main body to facilitate the guiding of the device into the cradle.

40. A combination according to claim 39 wherein a side of the well opposite to said side wall is open.

41. A combination according to claim 39 or 40 wherein the device is provided with a movable flap which when closed covers a portion of the front of the unit and covers a call activation switch, the well being dimensioned so that the device may be inserted therein only with the flap in an open position.

42. A wireless communication device comprising a mobile unit for transmission and reception of voice calls through a mobile phone network having a user-accessible call activation switch, the unit being programmed to communicate with a first stored telephone number on operation of said call activation switch, and wherein the unit is remotely activatable to open voice communication on receipt of a message from an authorised entity.

43. A device according to claim 42 wherein the internal settings of the unit are remotely controllable by means of messages from the authorised entity.

44. A communication system comprising:
at least one mobile device comprising a mobile unit for transmission and reception of voice calls and having a call activation switch, the device being programmable to call a predetermined number or numbers on operation of the switch;
at least one call processing centre associated with said predetermined telephone number or numbers at which a human operator receives calls from the device and initiates calls to the device through a mobile communication network;
and wherein the unit is remotely activatable to open voice communication on receipt of a message from an authorised entity.
